# EUROPEAN PATENT APPLICATION

(11) **EP 1 229 469 A1**
(43) Date of publication of application: **07.08.2002**
(21) Application number: 01200357.0
(22) Date of filing: 01.02.2001
(51) Int. Cl.: G06F 17/60

(54) **Method and arrangements for facilitating the sharing of audiovisual products**

(71) Applicant: Koninklijke Philips Electronics N.V., 5621 BA Eindhoven (NL)
(72) Inventor: The designation of the inventor has not yet been filed
(74) Representative: Schmitz, Herman Jan Renier

(57) **Abstract**

An arrangement (100) and method are disclosed for sharing a content item (101) such as a music title with a second user. A first user (110) grabs a piece of music from the title and sends said piece of music to a friend (130). The user device (110) adds a content identifier and a user identifier identifying the sender to the transmitted piece of music. The recipient reproduces the piece of music (102). If he or she subsequently decides to buy the complete title, the sender will obtain an award from the content owner (130) for promoting the title. This electronic version of "mouth-to-mouth" marketing encourages people to spread music clips and convince friends to purchase content items.

## Description

### FIELD OF THE INVENTION

The invention relates to a method and system for sharing of a content item. The invention also relates to a first user device, a second user device and a facilitating device for use in such a system.

### BACKGROUND OF THE INVENTION

While watching a movie or listening to a music title, it often happens that a person wishes that a friend or acquaintance would share the same content item. In the exponentially growing world of broadcasted audiovisual content, the chance becomes smaller and smaller. Once a content item is being broadcast, it is too late to start a recording which can be sent to that other person. It is very time-consuming and tedious for a person to obtain a copy on tape from the broadcasting organization, and very costly and labor-intensive for the broadcasting organization itself.

Even when a person does have a recording of the content item, it is not easy for him to quickly present it to another person. He would have to make a selection of representative moments in the playback of the content item, which is not easy to do with most consumer equipment. Further, copyright law puts restrictions on what one person may share from a content item with other persons.

### OBJECT AND SUMMARY OF THE INVENTION

It is an object of the invention to provide a an arrangement for facilitating the sharing of a content item, which is easy to use.

This object is achieved according to the invention in an arrangement as claimed in claim 1. A first user selects a content item which he wants to share with another user. He generates a representation of the content item, for example, by grabbing a 20 second sequence from a music track. The representation includes a content identifier identifying the item. This identifier may be inherently present, for example, by means of a watermark embedded by the content originator, or added to the content by the user's device in the form of metadata or a watermark. In the same manner, a user identifier is added to the representation. The representation including the content identifier and user identifier is then sent to another user, for example, a friend or acquaintance, who is believed to be interested in the same content. In response to reception of the representation, the other user may buy the full content item. To this end, his device transmits the content identifier and user identifier to a facilitating device. The facilitator then delivers the content item as identified by the content identifier. Obviously, he will charge the second user for said delivery. In turn for promoting the content, the facilitator submits an award to the first user, who is identified by the user identifier. With the invention is achieved that the spread of content, for example, music clips, is encouraged.

### BRIEF DESCRIPTION OF THE DRAWINGS

These and other aspects of the invention will be apparent from and elucidated with reference to the embodiments shown in the drawing, in which:

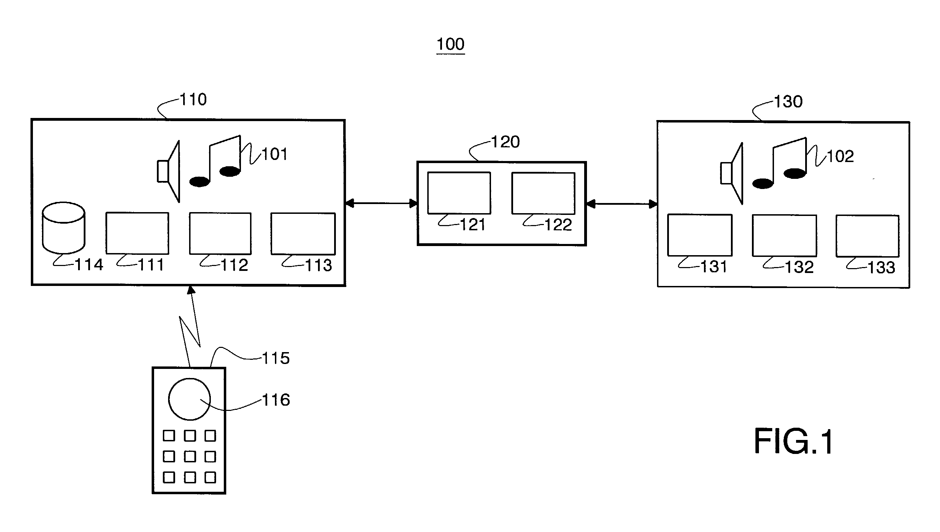

Figure 1 schematically shows an arrangement comprising a first user device, a facilitating device and a second user device according to the invention.

### DESCRIPTION OF A PREFERRED EMBODIMENT

Figure 1 schematically shows an arrangement 100 for facilitating the sharing of a content item 101. The arrangement 100 comprises a first user device 110, a facilitating device 120 and a second user device 130. Some of the features indicated in the drawings are typically implemented in software, and as such represent software entities, such as software modules or objects.

In this embodiment, the first user device 110 is a digital music player. The content item is a music title. It will be appreciated that the device may also be a television receiver for reproducing television programs or a DVD video player. The device comprises a a representation generating module 111, a transmitting module 112, a payment module 113, and a local storage 114. The music player can play content items such as CD tracks or MP3 files. The content items may be loaded from local storage 114 or received from external sources such as Internet or radio broadcasts. The device 110 may also be arranged for recording content received from external sources on the memory 114 for later playback. The user device may even comprise a microphone for picking up a live concert. The user uses a remote control 115 or other input device to control the operation of the first user device 110.

Since there is a huge amount of content items available in practice, and this amount will only increase in the near future, the first user device 110 may need to employ some filtering mechanism to allow the user to view only those content items he likes. This filtering mechanism could for instance automatically record any content item that fits a user profile for the user, so that the user can play back those content items at the time and in the order he desires. This means that a number of recorded content items can be present in the memory 114.

When the user, through filtering, flipping channels, browsing the memory 114 or some other means, finds the content item 101, which he likes, he may decide that he would like to share this content item 101 with another user. To this end, the first user device 110 comprises a content item selector 116, which can for instance be realized as a button on the remote control 115, or as a 'soft key' on a display screen of the first user device 110. The user uses this selector 116 to indicate his desire to share the content item presently being reproduced.

When the user uses the selector 116, a representation generating module 111 in the device is activated, which generates a representation of the content item including a content identifier. In an embodiment of the invention, the representation is constituted by a short sequence of the music track. In the case of a movie, the representation may be a still or a sequence of still images taken from the movie. The user may even compose a representation himself. In its simplest form, it is a straightforward text message.

The representation generating module 111 also adds a content identifier to the representation. The content identifier can identify the contents in various ways. The identifier may be already present in metadata accompanying the content item 101, or already embedded as a watermark in the content item 101. It may also be derived from, for instance, the date, time and channel that the user was listening to when he used the selector 116. This information is usually sufficient to determine which content item was being played. The user may even enter the content identifier himself.

Further in response to the activation of selector 116, the representation generation module 111 adds a user identifier to the representation, for example, the user's name and e-mail address. Again, this identifier may be added as metadata or embedded as a watermark.

The representation generating module 111 then passes the representation including the content identifier and user identifier to a transmitting module 112 which transmits it to the second user 130. The user may optionally add a personal message for the other user to this transmission. The recipient can be addressed directly through e-mail or a portable medium such as diskette.

The second user device 130 comprises a receiving module 131, a rendering module 132, and a payment module 133. The receiving module 131 receives the representation 102 and extracts the content identifier and user identifier. The rendering module 132 presents the representation 102, and displays the sender of the representation on a screen. The rendering module 132 may also display a "buy" button on the screen. The recipient can now decide whether he or she wants to buy the full content item 101.

When the second user orders the content item, the device 130 establishes a connection with the facilitating device 120. The facilitating device 120 comprises a receiving module 121 which receives the content identifier and the user identifier. The facilitating device 120 is also provided with an electronic payment module 122 for receiving an electronic payment from the second user device 120 and submitting an electronic payment to the first user device 110. In order to receive the latter payment, the first user device comprises a payment module 113.

The facilitating device 120 can be realized as a computer program product being arranged for causing a processor to execute the method according to the invention. The computer program product enables a programmable device when executing said computer program product to function as the facilitating device 120.

In the above-described embodiment, the representation of content item 101 is generated by the first user device. It is also possible to let the facilitating device 120 generate the representation. In such an embodiment of the invention, the first user establishes a connection with the facilitating device 120, and transmits the content identifier and the user identifier, as well as a further user identifier identifying the second user 130. In response thereto, the facilitating device generates the representation and sends said representation including the content identifier and user identifier to the second user device.

An arrangement (100) and method are disclosed for sharing a content item (101) such as a music title with a second user. A first user (110) grabs a piece of music from the title and sends said piece of music to a friend (130). The user device (110) adds a content identifier and a user identifier identifying the sender to the transmitted piece of music. The recipient reproduces the piece of music (102). If he or she subsequently decides to buy the complete title, the sender will obtain an award from the content owner (130) for promoting the title. This electronic version of "mouth-to-mouth" marketing encourages people to spread music clips and convince friends to purchase content items.

## Claims

1. A system for sharing a content item, comprising a first user device, a facilitating device and a second user device,
the first user device comprising means for generating a representation of said content item, said representation being provided with a content identifier, means for adding to the representation a user identifier identifying the first user,
the second user device comprising means for receiving the representation including the content identifier and user identifier from the first user device, and means for transmitting the content identifier and user identifier to the facilitating device,
the facilitating device comprising payment means for submitting a payment to the first user in response to reception of the identifiers from the second user device.

2. The system as claimed in claim 1, wherein the second user device comprises means for ordering from the facilitating device the content item identified by the content identifier.

3. The system as claimed in claim 1, wherein the first user device further comprises means for grabbing from the content item a sequence constituting said representation of the content item.

4. A first user device for use in the system of claim 1, comprising means for generating a representation of a content item, said representation being provided with a content identifier, means for adding to the representation a user identifier identifying the user, means for transmitting the representation including the content identifier and user identifier to a second user device.

5. A second user device for use in the system of claim 1, comprising means for receiving from a first user device a representation of a content item, the representation including a content identifier and user identifier identifying the first user, means for transmitting the content identifier and user identifier to a facilitating device.

6. A facilitating device for use in the system of claim 1, comprising means for receiving from a second user device a content identifier and a user identifier, means for delivering to the second user the content item identified by the content identifier, and means for submitting a payment to a first user identified by said user identifier.

7. A method of facilitating the sharing of a content item, comprising the steps of receiving from a second user device a content identifier and a user identifier, delivering to the second user the content item identified by the content identifier, and submitting a payment to a first user identified by said user identifier.

8. A computer program product being arranged for causing a computer to execute the method of claim 7.
